# EUROPEAN PATENT APPLICATION

(11) **EP 3 360 734 A1**
(43) Date of publication of application: **15.08.2018**
(21) Application number: 17155266.4
(22) Date of filing: 08.02.2017
(51) Int. Cl.: B60R 21/2346, B60R 21/237, B60R 21/235

(54) **GAS GUIDE FOR AN AIRBAG AND METHOD OF MANUFACTURING A GAS GUIDE**

(71) Applicant: Autoliv Development AB, 447 83 Vargarda (SE)
(72) Inventor: PETECKA, Magdalena, 58-500 Jelenia Góra (PL); PRZEMYSLAW, Siecla, 63-900 Rawicz (PL); KONECZNY, Grzegorz, 63-900 Rawicz (PL)
(74) Representative: AWA Sweden AB

(57) **Abstract**

The present invention relates to a gas guide (18) for an airbag (1), the gas guide (18) comprising a first woven fabric panel (5) and a second woven fabric panel (6), wherein the first and second woven fabric panels (5, 6) are interconnected by at least one joint (7, 8) and folded in such a manner that a first portion (5a) of the first woven fabric panel (5) and a first portion (6a) of the second woven fabric panel (6) together form an inner layer (12) of the gas guide (18), and a second portion (5b) of the first woven fabric panel (5) and a second portion (6b) of the second woven fabric panel (6) together form an outer layer (13) of the gas guide (18).

## Description

### Technical Field of the Invention

The present invention relates to a gas guide for an airbag and a method of manufacturing such a gas guide.

### Background Art

In most new vehicles today, safety airbags are included. Airbags of different types, such as inflatable curtains and pedestrian protection airbags, may use a textile gas guide to direct inflation gas from an airbag inflator into the airbag, in the needed directions so that it will inflate quickly. Since the inflation gas is expanding quickly the pressure inside the gas guide will be very high, which the gas guide needs to be able to withstand. Furthermore, the inflation gas may have a high temperature. The gas guide may thus need to be able to withstand a large influx of hot gas.

Previous textile gas guides for airbags have been formed by pieces of fabric that are sewn together. Such gas guides have several problems related to the seams. During inflation the seams can break due to the forces caused by the high pressure or the stitches can be damaged by the flow of hot gas. If the seams are damaged the gas guide will no longer hold tight and the gas will not be guided into the desired direction, thus risking the failure of the inflation. To mitigate these problems, the gas guides have to be sewn in special, complicated ways and several reinforcements may be needed. Both the seams and the form of the gas guides are affected. The gas guides will be more difficult, more time consuming and therefore more expensive to make.

One example of a sewn together textile gas guide for an airbag is disclosed in US 2009/0295134. The gas guide is sewn together in such a way that some of the problems with sewn seams are mitigated. It comprises a fabric member with an obverse and a reverse side. The fabric member overlaps on itself at least once such that at least a portion of the obverse side align with at least a portion of the reverse side to define an overlapping region. A first seam is sewn through the overlapping region such that the seam is in shear stress when the gas guide is filled with gas. It further describes how the fabric member can overlap on itself twice or more defining a twice or more overlapping region.

However, even though the disclosed gas guide mitigates some of the problems with sewn seams, it still suffers from them.

Another aspect of known textile gas guides is that the manufacturing step of sewing, itself, takes additional time and money.

With respect to previously known solutions, it is desired to provide a textile gas guide that is less complex.

### Summary of the Invention

It is an object of the present invention to provide an improved textile gas guide for an airbag, which gas guide is easy to manufacture.

These and other objects that will be apparent from the following summary and description are achieved by a gas guide according to the appended claims.

According to one aspect of the present disclosure there is provided a gas guide for an airbag, the gas guide comprising a first woven fabric panel and a second woven fabric panel, wherein the first and second woven fabric panels are interconnected by at least one joint and folded in such a manner that a first portion of the first woven fabric panel and a first portion of the second woven fabric panel together form an inner layer of the gas guide, and a second portion of the first woven fabric panel and a second portion of the second woven fabric panel together form an outer layer of the gas guide.

The fold enables a robust and durable gas guide to be manufactured in an easy manner. Furthermore, a cost-efficient gas guide may be provided, since sewing operations may be avoided and/or since woven pieces of fabric may be used in an efficient manner with very little fabric waste.

According to one embodiment the gas guide can be folded such that a first portion of a first panel and a first portion of a second panel is folded into the gas guide such that interconnection(s) of these portions are positioned inside the gas guide. This embodiment has the advantage that interconnection(s) positioned inside the gas guide further increases the robustness of the gas guide, since the interconnection(s) itself form a recinforcement that provides an additional protection against the influence of inflation gas. By folding the gas guide this way, the capability to withstand a large influx of inflation gas, e.g. hot gas, is thus further improved.

According to one embodiment a portion of said at least one joint is thus situated inside the gas guide.

According to one embodiment said at least one joint is an interwoven joint. This embodiment has the advantage that a gas guide can be manufactured with even fewer, or possibly even without, sewn seams. Furthermore, several sewing steps may be avoided. Also, an interwoven joint enables a very robust and durable interconnection between the fabric panels. The gas guide may thus be a one-piece woven gas guide, which enables the gas guide to be manufactured in a very efficient manner.

According to one embodiment said at least one joint is a sewn joint.

According to one embodiment said first portions of the fabric panels and said second portions of the fabric panels are of the same shape. This embodiment has the advantage that the formed layers will fit so that there are no parts of the gas guide without two layers.

According to one embodiment the gas guide can include a gasket which can be attached to the inside of the gas guide by sewing.

The number of fabric panels can be more than two, some of them interconnected by interwoven joints and some by other type of joints, such as e.g. sewn seams. The gas guide may thus comprise one or several reinforcement layers.

The gas guide can include a second joint, interconnecting the first and second woven fabric panels, such that the joints define an inlet and one or several outlet(s) of the gas guide. The additional joint may be a sewn seam. The sewn seam can go through all the layers of the gas guide or it can go through only the inner layers.

According to one embodiment the gas guide is formed as a part of an airbag, such as an inflatable curtain or a pedestrian protection airbag, of a one-piece woven type, which allows an airbag assembly comprising a gas guide to be manufactured in a very efficient manner.

According to another aspect of the present disclosure there is provided a method of manufacturing a gas guide for an airbag, said method comprising the steps of weaving a layered structure comprising a first and a second panel, interconnecting the first and second panels along at least one joint, and folding the layered structure in such a manner that a first portion of the first panel and a first portion of the second panel together form an inner layer, and a second portion of the first panel and a second portion of the second panel together form an outer layer, thereby forming the gas guide.

This method enables several, if not all, steps of sewing in known gas guides to be replaced by a more simple sewing pattern or by a weaving process or by a combination thereof.

According to one embodiment the first and second panels are interconnected by interweaving threads of the first and second panels while weaving the layered structure. An interwoven joint interconnecting the panels are thus formed in the weaving operation.

According to one embodiment the layered structure is folded in such a manner that a portion of said at least one joint becomes situated inside the gas guide.

According to one embodiment the layered structure and an airbag, to which the finished gas guide is configured to be connected, are weaved in one single weaving operation, e.g. using one-piece woven technology.

These and other aspects of the invention will be apparent from and elucidated with reference to the claims and the embodiments described hereinafter.

### Brief Description of the Drawings

The invention will hereafter be described in more detail and with reference to the appended schematic drawings.

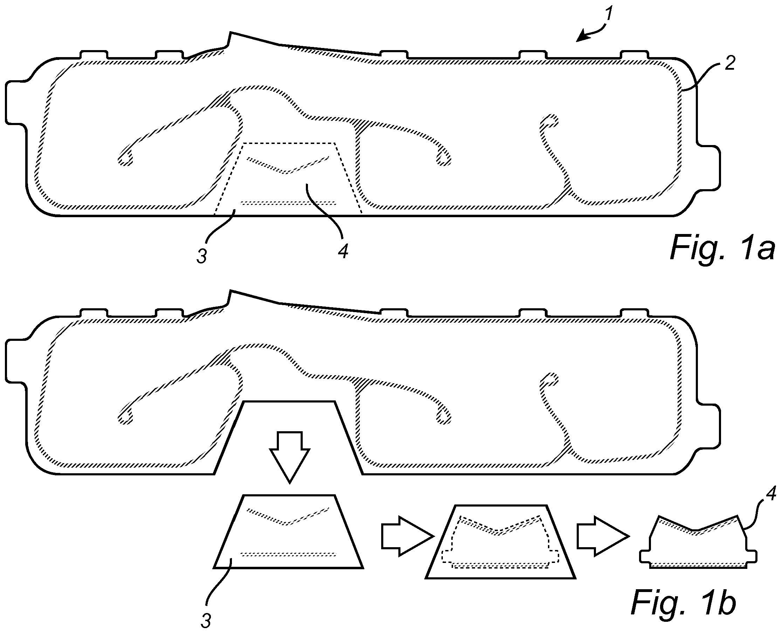

Figure 1 a illustrates a one-piece woven airbag of an inflatable curtain variety with a woven structure in an excess area of the one-piece woven airbag fabric.
Figure 1 b illustrates the airbag shown in Figure 1 a with the woven structure of the excess fabric area cut out.
Figure 2a is a perspective view and illustrates an unfolded gas guide according to an embodiment of the present disclosure.
Figure 2b is a perspective view and illustrates a half-way folded gas guide of the present dislosure.
Figure 2c is a perspective view and illustrates a folded gas guide of the present disclosure.
Figure 2d is a cross section view along line A-A in Figure 2c.
Figure 2e is a perspective view and illustrates a gas guide further configured for being attached to an airbag.
Figure 3a illustrates a one-piece woven airbag of an inflatable curtain variety and a gas guide according to an embodiment of the present disclosure.
Figure 3b is a side view and illustrates a one-piece woven airbag of an inflatable curtain variety provided with a gas guide according to an embodiment of the present disclosure.

### Detailed Description of Preferred Embodiments of the Invention

In figure 1 a a one-piece woven airbag 1 of the inflatable curtain variety is shown. The airbag 1 comprises two fabric panels interconnected along interwoven joints 2 defining the edges and inner structure of the airbag. In the excess fabric 3 located between portions of the airbag 1 an interwoven structure 4 is shown. This interwoven structure 4, which has been woven simultaneously as the airbag 1, is what will become a gas guide of the present disclosure. In figure 1 b it is shown how this woven structure 4 is cut out from the fabric forming the airbag 1. First the entire excess fabric area 3 is cut out and then the interwoven structure 4 is cut away from the excess fabric 3. The interwoven structure 4 is configured to become a gas guide 18 for the airbag 1. In figure 1 b it is shown in an unfolded state, ready to be further processed into a gas guide.

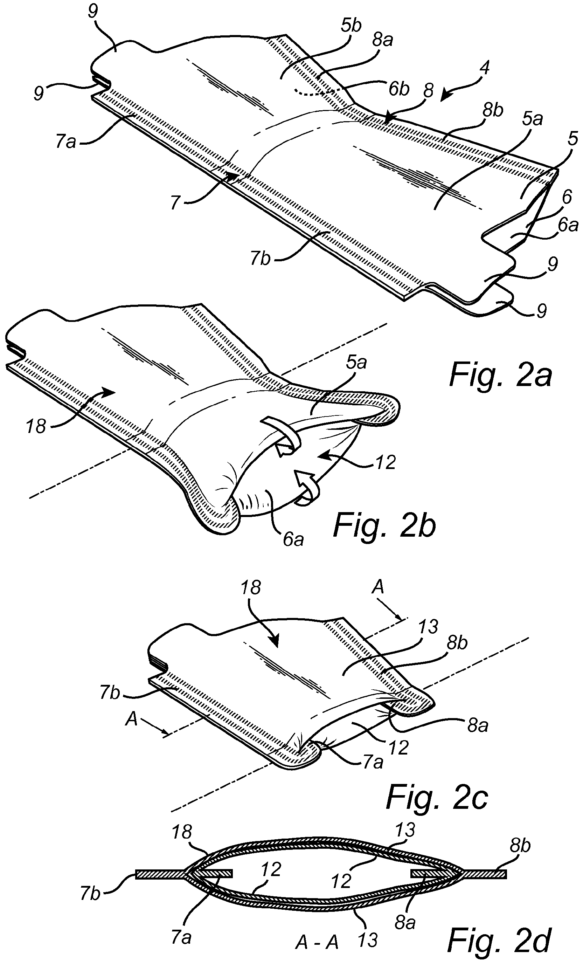

The cut out, unfolded woven gas guide structure 4 of figure 1 b is further shown in figure 2a. The woven structure 4 comprises a first 5 and a second 6 woven fabric panel. The woven structure 4 is thus a layered structure comprising two layers formed by the panels 5, 6, respectively. The panels 5, 6 are interconnected along two interwoven joints 7, 8, formed by interweaving threads of the two panels 5, 6 while weaving the woven structure 4. The joints 7, 8 are situated along two edges of the woven structure 4. A first joint 7 in the form of a straight line and a second joint 8 in the form of two straight lines angled toward each other. Other than along the joints 7, 8 the panels are separate from each other forming an open channel between the panels 5, 6, the edges between the joints 7, 8 being open. On the open edges there are extensions 9 of the fabric panels. Each panel comprises two portions, a first portion 5a and 6a, respectively, and a second portion 5b and 6b, respectively. All panel portions 5a, 5b, 6a, 6b are of equal size and shape.

Figure 2b is showing the layered structure 4 of figure 2a in a half-way folded state. The first portions 5a, 6a of the first and second woven fabric panels 5, 6 are folded into the layered structure 4, forming an inner layer 12 of the gas guide 18, as illustrated by arrows in Figure 2b. The gas guide 18 is folded such that interwoven joint portions 7a, 8a are positioned on the inside of the inner layer 12 and interwoven joint portions 7b, 8b of the outer layer 13 are positioned on the outside of the outer layer 13, as best illustrated in Fig. 2d.

Figure 2c is showing the gas guide 18 in its folded state. The gas guide 18 is folded such that the gas guide has an inner layer 12 and an outer layer 13. The open edges of the fabric panels of the inner and outer layer are positioned beside each other. The inner layer 12, which forms an inner wall, is composed of the first portions 5a, 6a of the first and second woven fabric panels 5, 6. The outer layer 13, which forms an outer wall, is composed of the second portions 5b, 6b of the first and second woven fabric panels 5, 6. The gas guide 18 forms an open channel, as best illustrated in figure 2d. Furthermore, the gas guide 18 is folded such that the interwoven joint portions 7a, 8a at the inner layer 12 are situated on the inside of the inner layer 12, i.e. inside the gas directing channel of the gas guide 18, and the interwoven joint portions 7b, 8b at the outer layer 13 are situated on the outside of the outer layer 13.

Figure 2d shows a cross sectional view of the same gas guide 18 of figure 2c along the line AA in figure 2c. In this view it is further shown that the gas guide 18 has an inner layer 12 and an outer layer 13 and that two interwoven joint portions 7a, 8a are situated on the inside of the inner layer 12 and two interwoven joint portions 7b, 8b are situated on the outside of the outer layer 13.

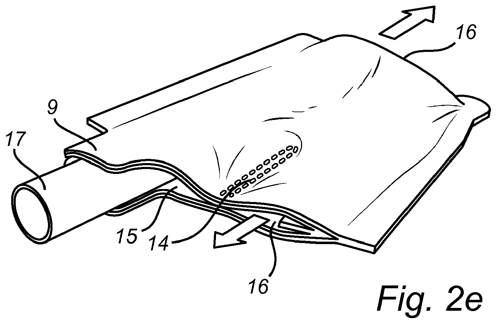

Figure 2e shows how the gas guide of figure 2c and figure 2d can be further configured for an inflatable curtain. A sewn seam 14, connecting the two sides of the gas guide, going through both sides, has been added. The seam being added on the open side of the gas guide where the extensions 9 of the open edges of the woven fabric panels are located. The seam 14 creates an inlet 15 and two outlets 16 of the gas guide. An airbag inflator 17 is received in the inlet 15 of the gas guide, between the extensions 9 of the open edges.

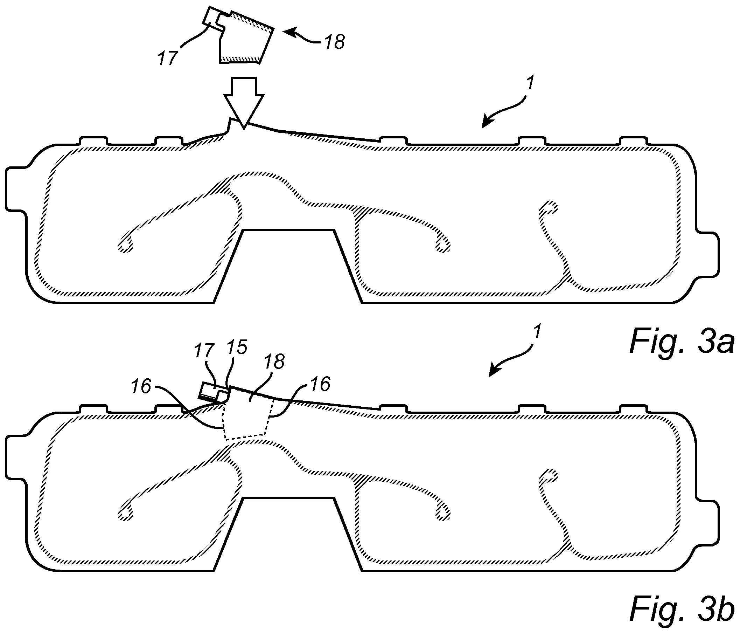

Figure 3a and figure 3b show how the gas guide 18 can be attached to an airbag 1 of the inflatable curtain variety, as one shown in figure 1 a and figure 1 b. An airbag inflator 17 is connected to the inlet 15 of the gas guide 18. The gas guide 18 is attached to the airbag 1 so that the airbag inflator 17 is situated partly outside the airbag 1 and the two outlets 16 of the gas guide are situated inside the airbag 1, as illustrated in Figure 3b.

With reference to Figures 1 a to 1 b and Figures 2a to 2d a method of manufacturing a gas guide 18 according to the present disclosure will now be described.

In a first step, a layered structure 4, illustrated in Fig. 2a, is woven. The woven structure 4 may thus, as in this case, be woven simultaneously as an airbag 1, illustrated in Fig. 1 a, using one-piece woven (OPW) technology. The layered structure 4 and an airbag 1, to which a gas guide 18 thay may be formed from the layered structure 4 can be connected to in a later step, may thus be woven in one single weaving operation. The layered structure 4 is made such that is consists of a first 5 and a second 6 fabric panel, interconnected by two interwoven joints 7, 8, a first 7 joint in a straight line and a second joint 8 in two straight lines angled toward each other. The interwoven joints 7, 8 are formed by interweaving threads of the panels 5, 6 while weaving the layered structure 4.

After weaving, if the layered structure 4, as in this case, is woven simultaneously as an airbag in one single weaving operation, the layered structure 4 is cut away from any surrounding fabric, as illustrated in figure 1 b, the cuts made along the interwoven joints and between the ends of the interwoven joints 7, 8. The layered structure 4 is thus in this case cut out from a fabric, illustrated in Fig. 1 a, that is woven, using one-piece woven technology, to form both the airbag 1 and the layered structure 4, as illustrated in Fig. 1 b.

It is appreciated that the cutting step described hereinabove is optional. If the layered structure is woven individually, the cutting step described hereinabove is not needed. Then, in the weaving step, a layered structure comprising a first fabric panel and a second fabric panel, which are interconnected to each other by at least one joint, is woven.

In a subsequent step, the layered structure 4 is folded in such a manner that the first portion 5a of the first panel 5 and a first portion 6a of the second panel 6 together form an inner layer 12 of the gas guide 18, and the second portion 5b of the first panel 5 and the second portion 6b of the second panel 6 together form an outer layer 13 of the gas guide 18, as illustrated by arrows in Fig. 2b.

In the folding step, the first portion 5a of the first panel 5 and the first portion 6a of the second panel 6 are thus folded into the layered structure 4, such that they are positioned inside the second portion 5b of the first panel 5 and the second portion 6b of the second panel 6, and such that the open edges of the inner 12 and outer 13 layer are positioned beside each other.

In this manner the first portion 5a of the first panel 5 and the first portion 6a of the second panel 6 form an inner layer 12 of the gas guide and the second portion 5b of the first panel 5 and the second portion 6b of the second panel 6 form an outer layer 13 of the gas guide 18. Also, interwoven joint portions 7a, 8a are situated on the inside of the inner layer 12 and interwoven joint portions 7b, 8b are situated on the outside of the outer layer 13. A gas guide at this stage is shown in Figure 2c and in Figure 2d.

It is realized by a person skilled in the art that features from various embodiments disclosed herein may be combined with one another in order to provide further alternative embodiments.

Hereinbefore, with reference to figure 2b and 2c, it has been described that the first portions 5a, 6a of the panels 5, 6 are folded to become positioned inside the second portions 5b, 6b of the panels 5, 6. However, the gas guide can be folded in any way such that a first portion of a first panel and a first portion of a second panel are positioned to form an an inner layer of the gas guide, and a second portion of a first panel and a second portion of a second panel are positioned to form an outer layer of the gas guide, for example by folding the first portions 5a, 6a of the panels 5, 6 such that they are positioned outside the second portions 5b, 6b of the panels 5, 6.

Furthermore, it is realized that the interconnection between the fabric layers of the gas guide can be along a single joint or more than two joints. Furthermore, the joint(s) interconnecting the fabric layers of the gas guide can be formed in any shape, for example straight or curved or combinations of different shapes.

Also, the number of fabric panels can be more than two, some of them interconnected by interweaving and some by other means.

## Claims

1. A gas guide (18) for an airbag (1), the gas guide (18) comprising a first woven fabric panel (5) and a second woven fabric panel (6),
**characterized in that**
the first and second woven fabric panels (5, 6) are interconnected by at least one joint (7, 8) and folded in such a manner that a first portion (5a) of the first woven fabric panel (5) and a first portion (6a) of the second woven fabric panel (6) together form an inner layer (12) of the gas guide (18), and a second portion (5b) of the first woven fabric panel (5) and a second portion (6b) of the second woven fabric panel (6) together form an outer layer (13) of the gas guide (18).

2. A gas guide (18) according to claim 1, wherein a portion (7a, 8a) of said at least one joint (7, 8) is situated inside the gas guide (18).

3. A gas guide (18) according to any of the preceding claims, wherein said at least one joint (7, 8) is an interwoven joint (7, 8).

4. A gas guide (18) according to any of the preceding claims, wherein said first portions (5a, 6a) of the woven fabric panels (5, 6) and said second portions (5b, 6b) of the woven fabric panels (5, 6) are of the same shape.

5. A gas guide (18) according to any of the preceding claims, wherein said gas guide (18) is made of the same woven fabric as an airbag (1) to which it is configured to be connected.

6. A gas guide (18) according to any of the preceding claims, wherein said gas guide (18) is formed as a part of an airbag, such as an inflatable curtain or a pedestrian protection airbag, of a one-piece woven type.

7. Method of manufacturing a gas guide (18) for an airbag (1), said method comprising the steps of
weaving a layered structure (4) comprising a first (5) and a second (6) panel,
interconnecting the first and second panels (5, 6) along at least one joint (7, 8), and
folding the layered structure (4) in such a manner that a first portion (5a) of the first panel (5) and a first portion (6a) of the second panel (6) together form an inner layer (12), and a second portion (5b) of the first panel (5) and a second portion (6b) of the second panel (6) together form an outer layer (13), thereby forming the gas guide (18).

8. Method according to claim 7, wherein the first and second panels (5, 6) are interconnected by interweaving threads of the first and second fabric panels (5, 6) while weaving the layered structure (4).

9. Method according to any of claims 7 and 8, wherein the layered structure (4) is folded in such a manner that a portion (7a, 8a) of said at least one joint (7, 8) is situated inside the gas guide (18).

10. Method according to any of claims 7-9, wherein the layered structure (4) and an airbag (1), to which the finished gas guide (18) is configured to be connected, are weaved in one single weaving operation.
